Europäisches Patentamt

European Patent Office

Office européen des brevets

(11) Numéro de publication: **0 462 139 B1**

(12) **FASCICULE DE BREVET EUROPEEN**

(45) Date de publication de fascicule du brevet: **01.06.94**  (51) Int. Cl.⁵: **F16K 7/06**

(21) Numéro de dépôt: **90903843.2**

(22) Date de dépôt: **05.02.90**

(86) Numéro de dépôt internationale :
**PCT/FR90/00087**

(87) Numéro de publication internationale :
**WO 90/10810 (20.09.90 90/22)**

---

(54) **VANNES A PASSAGE DIRECT AVEC MANCHON CAOUTCHOUC ET OBTURATEUR HEMISPHERIOUE.**

---

(30) Priorité: **09.03.89 FR 8903217**

(43) Date de publication de la demande:
**27.12.91 Bulletin 91/52**

(45) Mention de la délivrance du brevet:
**01.06.94 Bulletin 94/22**

(84) Etats contractants désignés:
**DE GB**

(56) Documents cités:
**CH-A- 179 527**
**DE-A- 2 002 240**
**US-A- 3 285 563**

(73) Titulaire: **GROSSET, Jean-Michel**
**Lieu-dit "Pont-du-Bois"**
**2 bis, avenue d'Uchamp**
**Izon F-33450 Saint-Loubes(FR)**

(72) Inventeur: **GROSSET, Jean-Michel**
**Lieu-dit "Pont-du-Bois"**
**2 bis, avenue d'Uchamp**
**Izon F-33450 Saint-Loubes(FR)**

---

Rank Xerox (UK) Business Services
(3.10/3.09/3.3.3)

**Description**

La présente invention concerne un dispositif de vanne à passage direct qui autorise, limite ou stoppe mécaniquement l'écoulement d'un fluide sous pression dans une canalisation.

Deux techniques sont actuellement utilisées pour la construction des vannes a manchon déformable. La première consiste à écraser le manchon entre deux pinces qui lui sont extérieures et transversales, centrées dans le sens de sa longueur. Ces vannes utilisent des manchons de formes spéciales. La seconde technique, comme décrite dans le brevet CH - A - 179 527 (KUGLER), consiste à comprimer le manchon avec un obturateur hémisphérique dans une enveloppe extérieure à laquelle est fixé le manchon. La vanne selon le document CH-A- 179 527 divulgue, outre les caractéristiques des préambules des revendications indépendantes 1 et 2, un dispositif de serrage des extrémités du manchon en caoutchouc dans l'enveloppe extérieure comprenant une partie d'extrémité conique d'un élément tubulaire, cette partie conique étant lisse à l'extérieur, alésée au diamètre intérieur du manchon, l'épaulement intérieur d'une bague de liaison venant s'appuyer contre une partie de l'élément tubulaire, la bague de liaison étant vissée sur la surface extérieure de l'enveloppe, de sorte que, en vissant la bague de liaison, la partie conique de l'élément tubulaire emboîtée dans le manchon s'enfonce progressivement à l'intérieur du dit manchon, serrant ainsi son extrémité contre l'enveloppe extérieure. Dans les deux conceptions exposées ci-avant, les vannes ont un encombrement important par rapport au diamètre de passage, engendré par la fixation du manchon dans l'enveloppe extérieure et le guidage de l'obturateur.

La présente invention a pour objet de réduire l'encombrement et le poids de ces vannes et, à partir d'une même technique de fixation du manchon pour chaque type de vanne, proposer deux systèmes de manoeuvre de l'obturateur, sans que celui-ci soit guidé par l'enveloppe extérieure pour supprimer les phénomènes d'usure sur la pièce essentielle.

Les deux variantes de la vanne selon l'invention consistant à comprimer un manchon caoutchouc avec un obturateur dont l'extrémité est hémisphérique, sont définies par les revendications indépendantes 1 et 2. Un tube rigide entoure le manchon. Ce tube possède un orifice sur sa circonférence pour laisser passer l'obturateur. Le déplacement vertical ou en arc de cercle, de haut en bas, de l'obturateur comprime le manchon caoutchouc dans le tube pour obturer le passage du fluide. Diamétralement, le manchon se replie sur lui-même alors que, longitudinalement il s'étire. Après relâchement de l'obturateur, il reprend sa forme par élasticité. Le manchon caoutchouc est emboité à ses extrémités par des bagues, lesquelles le relient aux canalisations.

Le système de vanne selon l'invention comporte cinq parties essentielles :
- le manchon caoutchouc ;
- l'enveloppe extérieure ;
- les bagues de serrage et de liaison ;
- l'obturateur ;
- le mécanisme de commande de l'obturateur.

Le manchon est un tube de caoutchouc possédant ou non une armature textile, en aucun cas une armature métallique. La nature du caoutchouc est déterminée en fonction des caractéristiques chimiques du fluide transporté. La composition et les dimensions du manchon dépendent des conditions de pression, de température et débit souhaitées par l'utilisateur. Dans tous les cas, le manchon doit être apte à subir un allongement dans le sens de sa longueur non emtée et un écrasement dans le sens de son diamètre, ceci sans détérioration de sa struture ou déformation rémanente importante. Le manchon caoutchouc est confectionné spécialement ou découpé dans un tuyau du commerce. Les résultats aux essais imposés par les normes AFNOR NFT 46-002, NFT 46-004, NFT 46-021, NFT 47-130, NFT 47-202, NFT 47-251, déterminent l'aptitude d'un tuyau caoutchouc à répondre aux exigences posées ci-dessus.

L'enveloppe extérieure est un tube rigide dont le diamètre intérieur correspond au diamètre extérieur maximum du manchon. Ce tube entoure complètement la circonférence extérieure du manchon. Sa longueur est égale à la longueur du manchon. Un orifice sur sa circonférence, percé suivant un axe correspondant à son diamètre et au milieu de sa longueur, laisse passer l'obturateur. Longitudinalement le tube est centré sur le manchon. Il possède deux cônes identiques, a faible pente, usinés à chaque extrémité de son alésage. Ces cônes, qui évasent l'alésage vers l'extérieur, sont creusés de gorges circulaires peu profondes au profil arrondi, sur la longueur de leurs circonférences. Sur la circonférence extérieure du tube, et toujours à chaque extrémité, des filetages à pas fins servent au serrage des bagues de liaison.

Le serrage du manchon dans l'enveloppe extérieure s'effectue au moyen de deux bagues coniques et lisses à l'extérieur, alésées au diamètre intérieur du manchon. La conicité des bagues de serrage est la même que celle des cônes usinés dans l'enveloppe. La différence des diamètres entre les cônes de l'enveloppe et ceux des bagues est légèrement inférieure à deux fois l'épaisseur du manchon, de façon à maintenir celui-ci à ses extrémités sans glissement ni coupure. Les bagues de liaison, vissées à l'extérieur de l'enveloppe sont alésées au diamètre intérieur du manchon et épaulées intérieurement pour appuyer sur les bagues coniques. A l'opposé de l'épaulement, un mamelon fileté ou un taraudage sert de liaison avec les canalisations amont et aval. L'assemblage des différentes parties, enveloppe extérieure, manchon, bagues de serrage et de liaison, s'effectue comme suit. On introduit le manchon caoutchouc à l'intérieur de l'enveloppe de façon à ce qu'il vienne affleurer à chaque extrémité. On emboite ensuite l'une des bagues coniques dans le manchon, puis l'on visse une bague de liaison sur l'extérieur de l'enveloppe. Celle-ci enfonce progressivement le cône à l'intérieur du manchon, le serrant contre l'alésage conique de l'enveloppe extérieure. Le serrage est maximum lorsque l'épaulement intérieur de la bague de liaison vient en butée sur l'extrémité de l'enveloppe. En effectuant la même opération à l'autre bout, le manchon est rendu solidaire de l'enveloppe. Un produit de freinage et d'étanchéité doit être étalé sur les filetages des bagues de liaison et de l'enveloppe extérieure avant serrage.

L'obturateur est un cylindre possédant une extrémité hémisphérique. La partie cylindrique est usinée pour recevoir l'organe de manoeuvre. Il y a deux possibilités d'entrainement de l'obturateur :
- soit suivant un axe rectiligne perpendiculaire aux axes du manchon,
- soit suivant un axe circulaire qui coupe perpendiculairement l'axe longitudinal du manchon.

Dans le premier cas, il est manoeuvré par un système de vis à volant et écrou maintenu par un étrier. Cet étrier est formé par une embase perpendiculaire à l'enveloppe extérieure et partie intégrante de celle-ci, de deux goujons et d'un chapeau qui forme écrou pour la vis de manoeuvre. L'axe de déplacement de l'obturateur se confond avec l'axe de l'orifice sur la circonférence de l'enveloppe extérieure. La liaison entre vis et obturateur évite à celui-ci de tourner lorsqu'il entre en contact avec le caoutchouc, pour ne pas créer d'usure par frottement. Pour ce faire, un perçage borgne dans l'axe longitudinal de l'obturateur laisse l'empreinte conique du foret. Dans cette empreinte, on loge une bille sur laquelle vient appuyer l'extrémité de la vis de manoeuvre. Des tétons sont vissés diamètralement dans l'obturateur. Un tourillon à l'extrémité de la vis, correspondant au diamètre du perçage de l'obturateur, vient s'emboiter avec un jeu suffisant pour une libre rotation dans le perçage de celui-ci. Les tétons vissés dans l'obturateur se logent dans une gorge, usinée sur le tourillon de la vis, et assurent ainsi la liaison longitudinale des deux pièces; laissant la vis libre de tourner dans l'obturateur lorsqu'il rentre en contact avec le caoutchouc. Si une fuite du fluide circulant dans la vanne, par suite d'une rupture du manchon caoutchouc, présente un danger pour l'environnement extérieur, l'obturateur se déplace dans une enceinte tubulaire, perpendiculaire à l'enveloppe du manchon caoutchouc et faisant partie intégrante avec celle-ci. Dans le cas présent, l'étanchéité entre la vis de manoeuvre et l'enceinte tubulaire est assurée par une bague étanche vissée à la partie supérieure de l'enceinte. Cette technique de réalisation implique que la vis de manoeuvre possède une partie cylindrique lisse coulissant dans la bague étanche et prolongeant la partie filetée.

Dans le second cas, l'obturateur est manoeuvré par un levier articulé. L'obturateur, percé suivant son diamètre, est traversé par le levier dans sa partie cylindrique. Une vis de blocage assure la liaison entre l'obturateur et le levier. Une chape sert de point fixe pour l'articulation du levier. Cette chape fait partie intégrante de l'enveloppe extérieure du manchon. Elle est désaxée par rapport à l'enveloppe, verticalement. Horizontalement, son axe est perpendiculaire à l'axe longitudinal de la vanne et coïncide avec l'axe de l'orifice de l'enveloppe. Un axe traverse la chape et diamètralement une extrémité du levier. L'autre extrémité comporte une poignée ou un embout de manoeuvre. Le rapport des longueurs entre d'une part, l'axe d'articulation du levier et l'obturateur, et d'autre part, l'obturateur et l'embout de manoeuvre, dépend : de la nature du caoutchouc, du diamètre du manchon, de la pression d'utilisation de la vanne.

L'immobilisation du levier en position "vanne fermée" est assurée par un verrou en forme de "U". Un axe relie la partie supérieure des deux branches du "U" et traverse diamétralement le levier, permettant au verrou de s'articuler librement. Le verrou est placé entre l'obturateur et la poignée de manoeuvre, à l'opposé du point fixe. Une nervure pentée, partie intégrante de l'enveloppe extérieure du manchon, incline le verrou vers la poignée du levier pendant le mouvement de descente de l'obturateur. Lorsque le manchon est comprimé suffisamment pour assurer la fermeture de la vanne, le verrou s'engage par son propre poids dans une encoche pratiquée à la partie inférieure de la nervure pentée. Pour ouvrir la vanne, il suffit d'exercer une légère pression sur le levier articulé et de faire sortir le verrou de l'encoche. Une tige de commande peut être fixée au verrou, à la partie inférieure du "U". En appuyant sur le levier articulé, on déverrouille alors l'obturateur dans le même mouvement.

Le diamètre de l'obturateur est défini mathématiquement en fonction des diamètres intérieur et extérieur du manchon caoutchouc. La formule $d = D-(D'-D)$ donne le diamètre de l'obturateur, (D) étant le diamètre intérieur et (D') le diamètre extérieur du manchon. Suite à la détermination du diamètre de l'obturateur, il est possible de définir la longueur (L) du manchon allongé vanne fermée; et par voie de conséquence, le pourcentage d'allongement (a%) par rapport à sa longueur initiale (l) vanne ouverte :

L = l + Dα et

$$a\% = \frac{D\alpha \times 100}{l}$$

(D) étant le diamètre intérieur du manchon; (d) le diamètre de l'obturateur; (α) l'angle théorique formé par une génératrice intérieure du manchon en position repos, et la même génératrice lorsque le manchon est comprimé par l'obturateur en position vanne fermée. Ces formules, représentées graphiquement dans des coordonnées cartésiennes, forment des courbes. Si (l) est en abscisse avec (L) et (a%) en ordonnées, pour une valeur de (l), il est facile d'obtenir la valeur de l'allongement (a%) et la longueur allongée du manchon, (L). Les normes AFNOR précédemment citées et les valeurs relevées sur l'abaque définissent un (l) compatible avec la nature et la conception du manchon.

Les dessins annexés illustrent l'invention :

La figure 1 est une coupe transversale du manchon caoutchouc dans sa forme théorique, comprimé par l'obturateur.

La figure 2 représente le manchon caoutchouc, en coupe longitudinale, dans sa forme théorique, comprimé par l'obturateur.

La figure 3 est une représentation graphique des fonctions mathématiques définissant,la longueur allongée et le pourcentage d'allongement du manchon, comprimé par l'obturateur, en rapport avec sa longueur initiale.

Les figures 4, 5, 6 représentent une vanne non étanche (en position fermée figures 4 et 6), respectivement en coupe longitudinale (figure 4), en vue de dessus demie coupe (figure 5), en coupe transversale (figure 6), dont l'obturateur manoeuvré par vis à volant et écrou, se déplace perpendiculairement aux axes du manchon.

La figure 7 représente, en coupe transversale, une vanne non étanche en position ouverte, dont l'obturateur manoeuvré par vis à volant et écrou se déplace perpendiculairement aux axes du manchon.

Les figures 8, 9 représentent en coupe longitudinale partielle, le montage détaillé des cônes et bagues de liaison avec le manchon et l'enveloppe extérieure. La figure 8 présente une bague de liaison avec taraudage, tandis que la figure 9 présente une bague de liaison avec mamelon fileté.

La figure 10 représente une vue transversale partielle d'une bague de liaison avec mamelon fileté.

Les figures 11, 12, 13 représente une vanne étanche ( en position fermée (figures 11 et 13), respectivement en coupe longitudinale (figure 11), en vue de dessus demie coupe (figure 12), en coupe transversale (figure 13), dont l'obturateur manoeuvré par vis à volant et écrou se déplace perpendiculairement aux axes du manchon.

La figure 14 représente, en coupe transversale, une vanne étanche en position ouverte, dont l'obturateur manoeuvré par vis à volant et écrou se déplace perpendiculairement aux axes du manchon.

Les figures 15, 16, 17 représentent une vanne non étanche en position fermée, respectivement en coupe longitudinale (figure 15), en vue de dessus (figure 16), en coupe transversale (figure 17), dont l'obturateur, manoeuvré par un levier articulé, se déplace suivant un arc de cercle qui coupe perpendiculairement l'axe longitudinal du manchon.

Les figures 18, 19, 20 représentent une vanne non étanche en position fermée, dont l'obturateur, manoeuvré par un levier articulé, se déplace suivant un arc de cercle qui coupe perpendiculairement l'axe longitudinal du manchon. Les figures 18 et 19, en coupes transversales partielles, présentent le système de verrouillage sans tige de commande (figure 18) et avec tige de commande (figure 19). La figure 20 est une coupe longitudinale partielle du système de verrouillage.

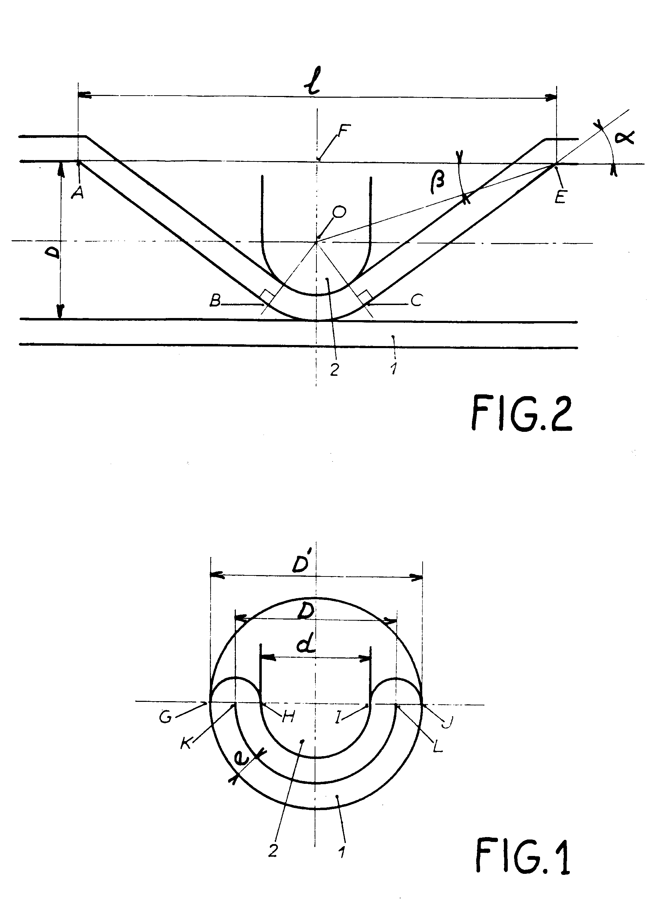

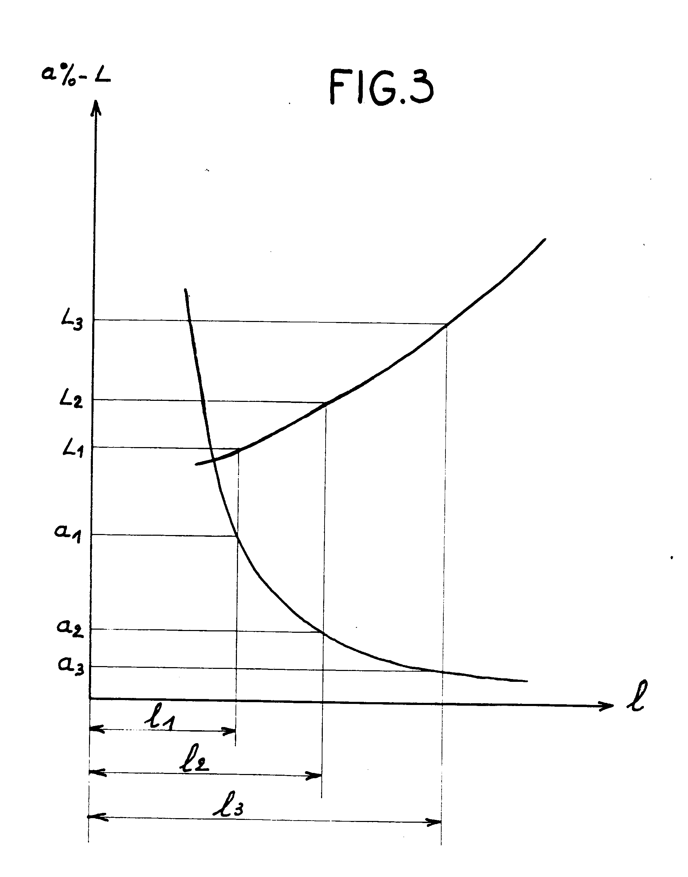

La figure 1 présente le manchon (1) dans sa forme théorique, en coupe transversale, comprimé par un obturateur (2), de sorte que le passage du fluide soit obstrué. Dans cette configuration (e) représente l'épaisseur du manchon, (D') le diamètre extérieur et (D) le diamètre intérieur. On écrit que :

$$e = \frac{D'-D}{2} .$$

Le diamètre de l'obturateur (d) s'écrit : d = D - 2e ou d = D - (D'-D)

En réalité, les diamètres extérieur (D') et intérieur (D) sont fabriqués avec des tolérances. Le diamètre extérieur (D') varie entre les cotes (D'maxi) et (D'mini), le diamètre intérieur (D) entre les cotes (D maxi) et (D mini).

En tenant compte des tolérances de fabrication du manchon de caoutchouc, on calcule le diamètre de

4

l'obturateur (d) par la formule suivante : d = D maxi -( D'mini - D maxi )
Le passage du fluide dans la vanne est obturé lorsque

$$\widehat{KL} = \frac{\pi D}{2}$$

c'est à dire lorsque deux demies circonférences intérieures du manchon se rejoignent. Dans cette position, la longueur de la circonférence extérieure du manchon replié :
$\widehat{JG} + \widehat{GH} + \widehat{HI} + \widehat{IJ}$ doit être égale à $\pi D'$

$$\widehat{JG} = \pi D'/2, \quad \widehat{GH} + \widehat{IJ} = 2\pi e \quad \text{et} \quad \widehat{HI} = \pi d/2$$

En effectuant la somme, on obtient :

$\pi D'/2 + 2\pi e + \pi d/2 = \pi(D'/2 + 2e + d/2)$

d/2 = D'/2 - 2e, en remplaçant d/2 par sa valeur on obtient:

$$\widehat{JG} + \widehat{GH} + \widehat{HI} + \widehat{IJ} = \pi D'$$

Ce résultat mathématique permet d'affirmer qu'avec un diamètre d'obturateur (d) défini par la formule ci-dessus mentionnée, le passage du fluide est obturé lorsque l'axe de la partie hémisphérique de l'obturateur se confond avec le diamètre du manchon et son axe longitudinal. Pour une étanchéité complète à la pression, il est nécessaire que les deux demies circonférences internes du manchon s'interpénètrent partiellement.

La figure 2 représente le manchon (1) dans sa forme théorique, en coupe longitudinale, comprimé par un obturateur (2) de sorte que le passage du fluide soit obturé. Le calcul de la longueur allongée du manchon se pose ainsi :

$$L = \overline{AB} + \widehat{BC} + \overline{CE} \quad \text{avec} \quad \overline{AB} = \overline{CE} .$$

Le calcul des longueurs $\overline{AB}$ et $\overline{CE}$ donne :

$(\overline{OE})^2 = (\overline{EF})^2 + (\overline{OF})^2$ et $(\overline{OE})^2 = (\overline{CE})^2 + (\overline{OC})^2$

d'ou il résulte, $(\overline{EF})^2 + (\overline{OF})^2 = (\overline{CE})^2 + (\overline{OC})^2$
et, $(\overline{CE})^2 = (\overline{EF})^2 + (\overline{OF})^2 - (\overline{OC})^2$
si l'on remplace $\overline{EF}, \overline{OF}, \overline{OC}$, par leur valeur

$(\overline{CE})^2 = (l/2)^2 + (D/2)^2 - (D/2)^2 \ (\overline{CE})^2 = (l/2)^2 \ \overline{CE} = l/2$

On en deduit que $\overline{CE} + \overline{AB} = l$, longueur libre du manchon.
Pour le calcul de l'arc $\widehat{BC}$ on pose : $\alpha = 2\beta$

$$\cos\beta = (\overline{EF})/(\overline{OE}) \quad \text{La valeur de } \overline{OE} = \sqrt{(\overline{EF})^2 + (\overline{OF})^2}$$
$$\cos\beta = (\overline{EF}) / \sqrt{(\overline{EF})^2 + (\overline{OF})^2}$$

ou en remplaçant $\overline{EF}, \overline{OF}$ par leur valeur,

$$\cos\beta = (l/2) / \sqrt{(l/2)^2 + (D/2)^2} = (l) / 2\sqrt{(l^2 + D^2)/4} .$$

Il suffit de convertir la valeur de cos $\beta$ en radian et d'appliquer $\alpha = 2\beta$ pour obtenir $\alpha$ en radian. L'angle

$$\widehat{BOC} = 2\alpha .$$

La longueur de la circonférence engendrant

$$\widehat{BC} = \pi D$$

d'ou l'équation

$$\widehat{BC} = (\pi D \times 2\alpha )/ 2\pi \quad et \quad \widehat{BC} = D\alpha$$

La longueur au manchon après allongement $L = I + D\alpha$

L'allongement du manchon $a = D\alpha$ et le pourcentage d'allongement $a\% = ( D\alpha \times 100 )/I$ .

Les deux formules, $L = I + D\alpha$ et $a\% = (D\alpha \times 100)/I$ permettent de tracer l'abaque en coordonnées cartésiennes représenté sur la figure 3 , (I) est en abscisse avec (L) et a% en ordonnées. Pour une valeur (I1), on obtient par lecture directe (L1) la longueur allongée du manchon avec (a1) le pourcentage d'allongement correspondant. De même pour (I2) et (I3) les valeurs (L2) et (a2), (L3) et (a3).

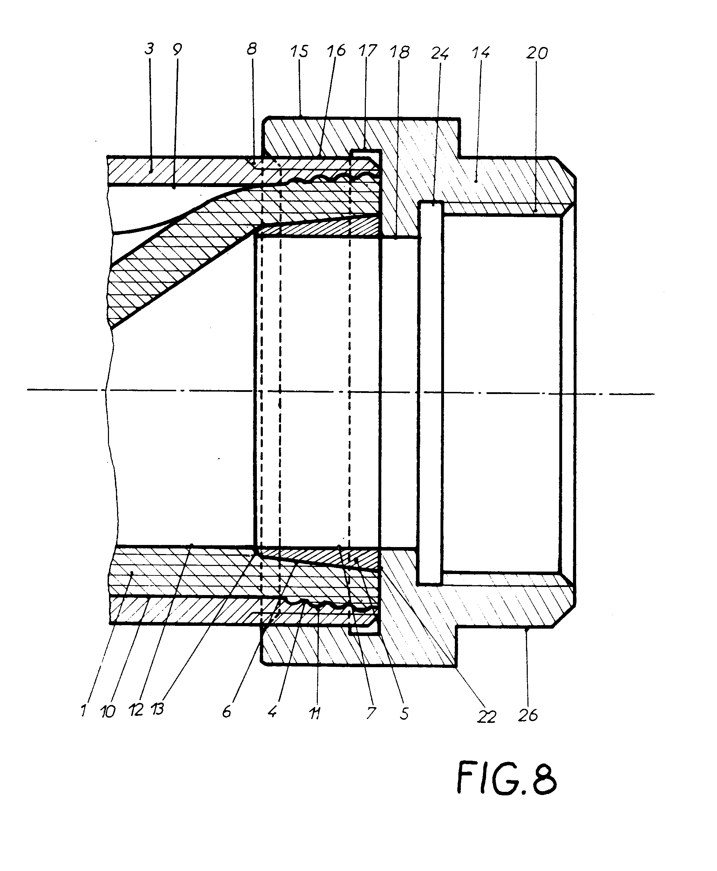

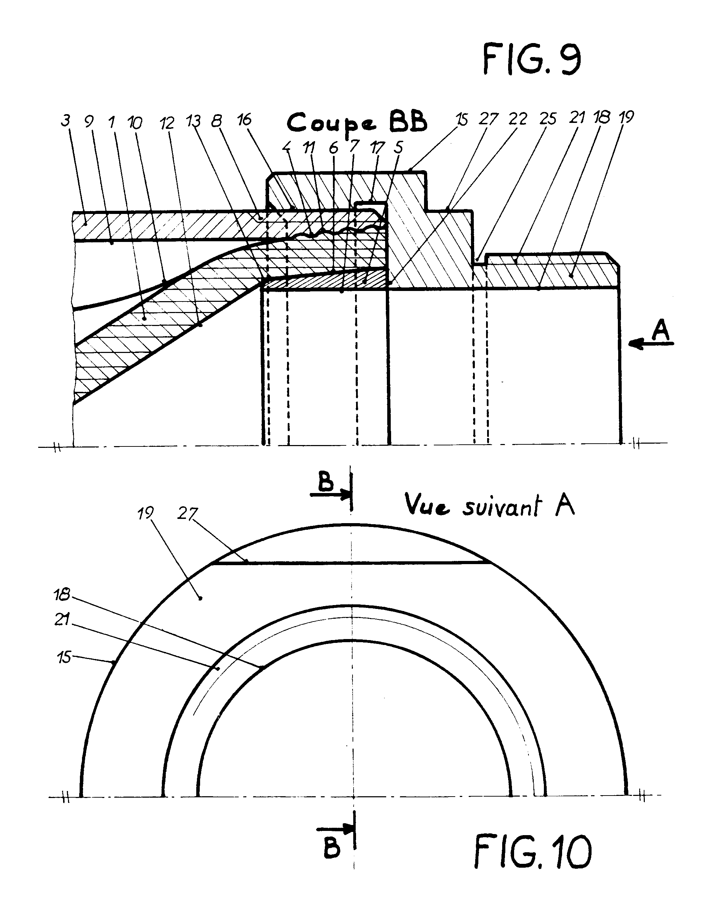

Quel que soit l'organe manoeuvrant l'obturateur (2), le montage du manchon caoutchouc (1)dans l'enveloppe tubulaire extérieure (3) est identique. La longueur de l'enveloppe extérieure (3) est égale à celle du manchon (1). Le diamètre de l'alésage (9) de l'enveloppe tubulaire (3) est égal au diamètre maximum du revêtement extérieur (10) du manchon (1). Le mode de liaison entre le manchon (1) et l'enveloppe extérieure (3) est similaire à chacune des extrémités de l'enveloppe. La liaison est assurée par des cônes (4), usinés à chaque extrémité de l'alésage (9). Ceux-ci ont un angle de pente d'environ 6ᵉ et sont creusés de gorges circulaires (11),au profil arrondi, représentées sur les figures 8 et 9. La profondeur des gorges (11) est proportionnelle aux diamètres des cônes (4) et à l'épaisseur de l'enveloppe extérieure (3), sans toutefois que des empreintes trop profondes forment avec les parties lisses intermédiaires des angles tranchants qui entament la structure du manchon caoutchouc (1). Le nombre de gorges (11) dépend de la longueur des cônes (4), du diamètre et de la texture du revêtement extérieur (10) du manchon. Ces gorges (11) ont pour but d'augmenter l'adhérence du revêtement extérieur (10) du manchon sur les cônes (4). Les extrémités de la circonférence extérieure de l'enveloppe (3) possèdent des filetages (8) au pas métrique fin, en rapport avec le diamètre extérieur de l'enveloppe (3).

Les bagues de serrage (5) ont un alésage (7) de diamètre identique au diamètre du tube (12) du manchon caoutchouc (1) et un cône extérieur lisse (6), dont l'angle de pente est le même que celui des cônes (4) de l'enveloppe (3) La longueur des bagues de serrage (5) est égale ou supérieure à celle des cônes (4) de l'enveloppe tubulaire (3), en aucun cas inférieure. La différence des diamètres entre les cônes (4) de l'enveloppe (3) et les cônes (6) des bagues de serrage (5) est légèrement inférieure à deux fois l'épaisseur du manchon (1). Il est souhaitable qu'un léger arrondi (13) termine le cône extérieur (6), du côté de son petit diamètre, comme représenté sur les figures 8 et 9, pour éviter qu'une arête trop vive coupe le tube (12) du manchon caoutchouc (1) en position vanne fermée.

Les bagues de liaison ont des formes différentes (14) ou (19), représentées sur les figures 8, 9, 10, suivant qu'elles possèdent un taraudage (20) ou un mamelon fileté (21) de liaison avec les tuyauteries amont et aval. Dans les deux cas, un taraudage (16) au pas métrique fin, se visse sur le filetage (8) de l'enveloppe (3). Il se termine par une gorge circulaire (17) qui forme épaulement (22) Alternativement, chaque bague de serrage (5) s'enfonce progressivement dans le tube (12), prenant appui sur l'épaulement (22), en vissant la bague de liaison (14) ou (19) sur l'enveloppe extérieure (3). Le serrage du manchon (1) est maximum lorsque le filetage (8) vient en butée sur l'épaulement (22). Un alésage (18), de même diamètre que le tube (12) du manchon (1), prolonge la partie vissée sur l'enveloppe extérieure (3). Les taraudages (20) ou filetages (21), destinés à la liaison avec les tuyauteries, sont usines avec des filets WHITWORTH au pas du gaz.Ils se terminent par des gorges circulaires, (24) en fin de taraudage ou (25) en fin de filetage. Des méplats (26) ou (27), sur la circonférence extérieure (15) des bagues de liaison (14) ou (19), permettent le serrage des dites bagues sur les filetages (8) de l'enveloppe extérieure (3).

Lorsque l'obturateur (2) est manoeuvré suivant un axe rectiligne, perpendiculaire aux axes du manchon (1), un étrier soutient et guide l'ensemble de manoeuvre. Cet étrier est composé d'une embase (28) formant nervure, partie intégrante de l'enveloppe tubulaire extérieure (3), et de deux goujons (29) qui maintiennent le chapeau (30) , formant écrou pour la vis de commande (31) ou (32). L'embase (28), placée dans un axe passant par le diamètre de l'enveloppe extérieure (3) et au milieu de sa longueur, possède deux trous taraudés (23), symétriques de chaque côté de cet axe et dans le même plan que celui-ci. Les goujons (29) ont une partie filetée (33), de diamètre inférieur au diamètre de la partie cylindrique lisse (34), terminée par une gorge (35) et un épaulement (36). Ils se vissent dans les trous taraudés (23) de l'embase, les épaulements (36) venant en butée sur les faces usinées (37). L'autre extrémité des goujons (29) est constituée d'une partie filetée (38), prolongée par une partie cylindrique lisse de même diamètre (40). Ces deux parties sont séparées par une gorge (39). La partie cylindrique (40) se termine par un épaulement (41) sur la partie cylindrique (34), qui lui est supérieure en diamètre. Les longueurs et diamètres des goujons (29) se déterminent en fonction , de la conception de la vanne (étanche ou non), des diamètres du manchon (1), de la pression d'utilisation. Le chapeau (30) forme écrou pour la vis de manoeuvre (31) ou (32). Dans son axe vertical, il comporte un bossage (42), traversé par un trou taraudé (43), où se déplace la vis (31) ou (32). Deux perçages (44), dont les axes sont symétriques par rapport à son axe vertical et dans le même plan, le fixent sur les goujons (29). Ces perçages (44) ont un diamètre supérieur au diamètre des filetages (38) et des parties cylindriques lisses (40) des goujons (29), pour s'emboiter librement. Deux lamages (45) servent de surface d'appui aux écrous de blocage (46). La face d'appui (47) repose sur des rondelles (48) dont l'alésage (49) est ajusté avec la partie cylindrique lisse (40) des goujons (29).

L'obturateur, (2) dans tous les systèmes de montage, comporte une partie cylindrique (50) et une extrémité hémisphérique (51). Dans un système de montage avec vis de manoeuvre (31) ou (32), il est percé dans l'axe de la partie cylindrique (50), d'un trou borgne (52) termine par l'empreinte conique du foret (53), où se loge une bille (54). La partie cylindrique (50) est traversée par deux trous taraudés (55), diamétralement opposés, qui débouchent dans le trou borgne (52) et dans lesquels viennent se visser deux vis à téton sans tête (56) enduites d'un produit de freinage.

La vis de manoeuvre (31) ou (32) est usinée de façon différente, suivant le type de vanne. La vanne non étanche est assemblée avec une vis de manoeuvre (31) dont le filetage (57) occupe toute la longueur de la tige, entre l'obturateur (2) et le carré de manoeuvre (58). La longueur du filetage (57) est égale au diamètre intérieur du manchon (1), augmentée de la hauteur du chapeau (30). On ajoute la valeur des intervalles nécessaires au bon fonctionnement, entre l'obturateur (2) et la face d'appui (47) du chapeau (30) en position vanne ouverte d'une part, entre le volant (60) et le bossage (42) du chapeau (30) en position vanne fermée d'autre part.

La vanne étanche est assemblée avec une vis de manoeuvre (32) qui se différencie de la vis (31) précédemment décrite en ce qu'une partie cylindrique lisse (61), usinée à la tolérance f7 avec une rugosité inférieure ou égale à deux microns, prolonge la partie filetée (57). Elle est séparée de celle-ci par une gorge circulaire (62). Dans ce cas, la longueur du filetage (57) est égale au diamètre intérieur du manchon (1), augmentée de la hauteur du chapeau (30) à laquelle on ajoute l'intervalle entre le volant (60) et le bossage (42) du chapeau (30) en position vanne fermée. La longueur minimum de la partie cylindrique lisse (61) est égale au diamètre intérieur du manchon (1), augmentée de la longueur de l'alésage (77) dans la bague étanche (73). L'obturateur (2) s'assemble de façon identique avec les vis de manoeuvre (31) ou (32); l'extrémité du filetage (57) ou de la partie cylindrique lisse (61) présente un tourillon (63) qui se loge dans le trou borgne (52) de l'obturateur (2), avec un jeu suffisant pour une libre rotation de la vis de manoeuvre (31) ou (32), lorsque l'obturateur (2) entre en contact avec le manchon caoutchouc (1). Le tourillon (63) forme un épaulement (66) avec la partie cylindrique lisse (61) qui n'a pas de contact avec la partie supérieure de l'obturateur (2). Seule la face plane (64), en bout du tourillon (63), vient en contact avec la bille (54) qui sert de point d'appui à la vis de manoeuvre (31) ou (32), pendant la compression du manchon (1). Dans une gorge circulaire (65), usinée sur le tourillon (63) se logent les tétons des vis sans tête (56) qui assurent la liaison en translation de la vis de manoeuvre (31) ou (32) et de l'obturateur (2), sans entraver la rotation. Les deux types de vis (31) et (32) se terminent à la partie supérieure par un carré de manoeuvre (58) qui reçoit le volant (60). Un trou taraudé (67), au centre du carré, permet la fixation du volant. Les diamètres et le pas des filetages des vis de manoeuvre (31) ou (32) sont calculés en fonction des diamètres des manchons (1) et de la pression d'utilisation des vannes.

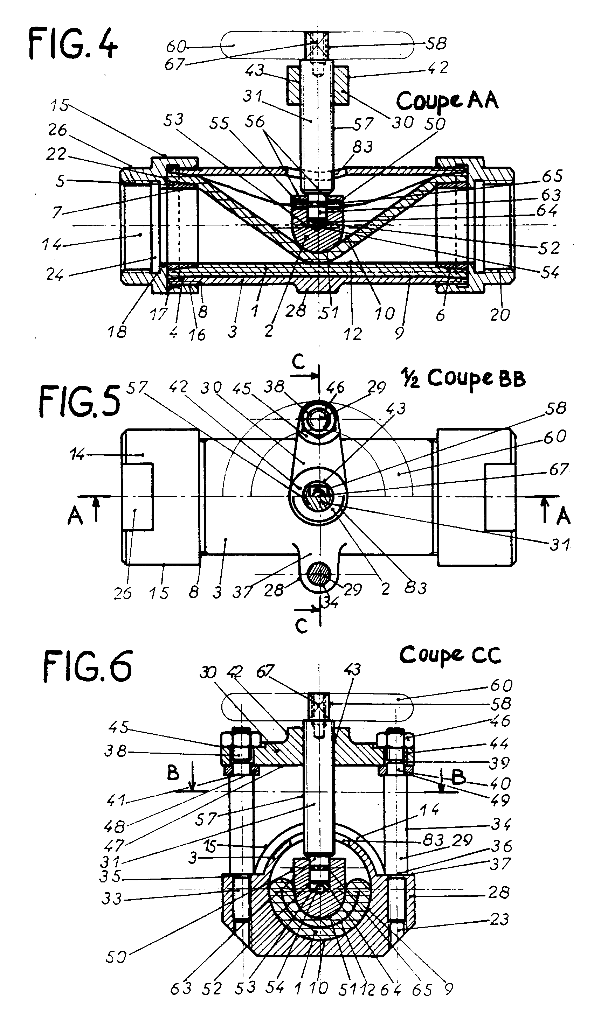

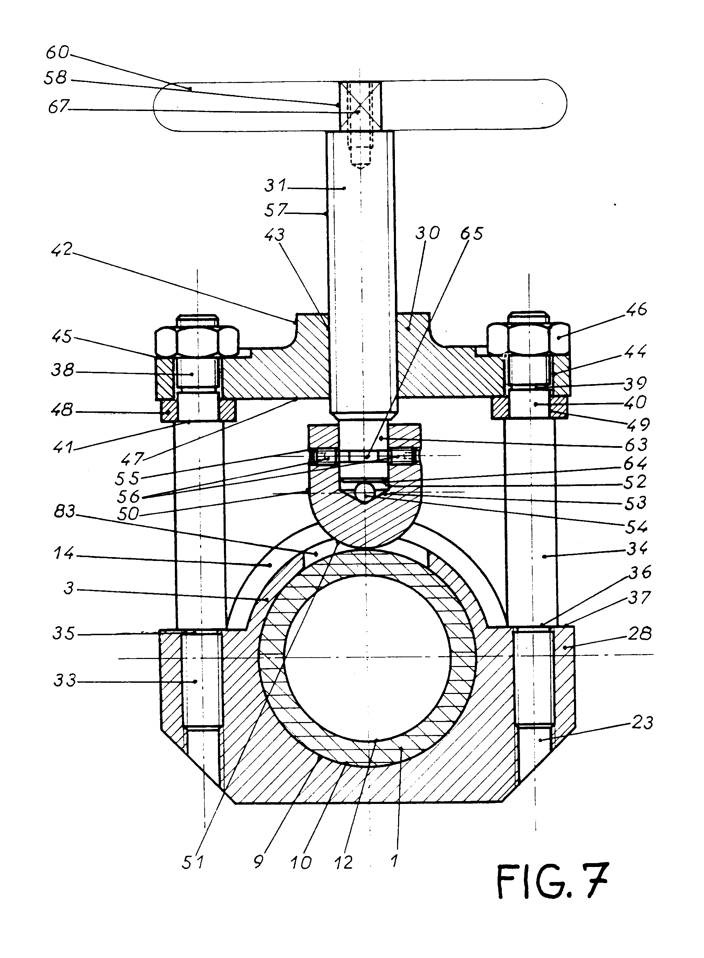

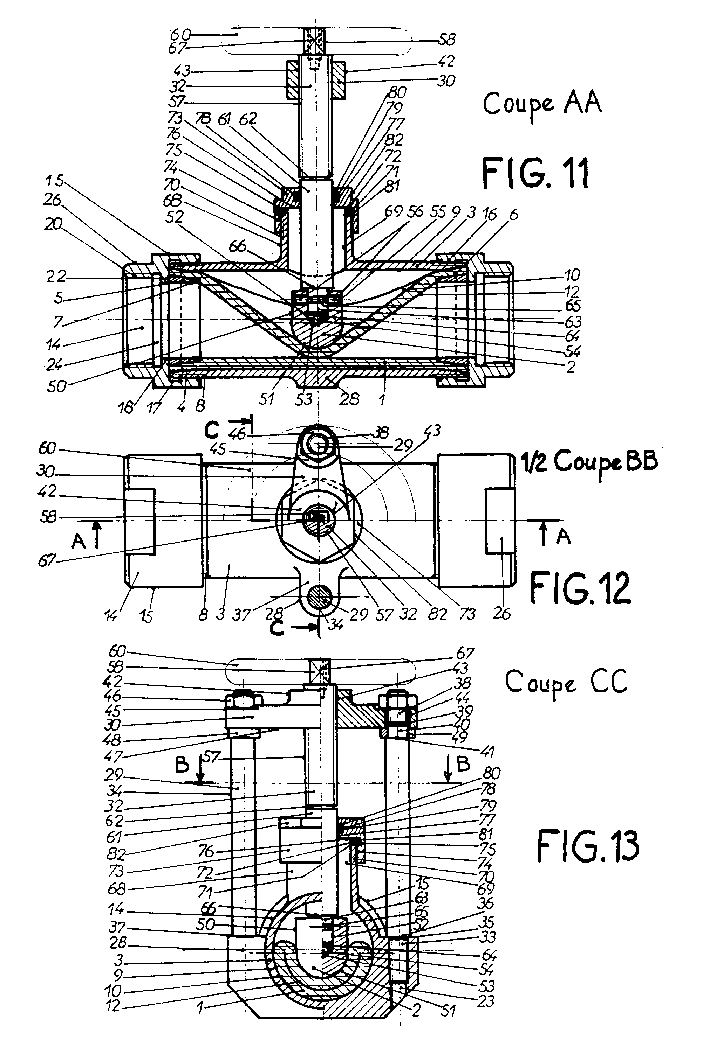

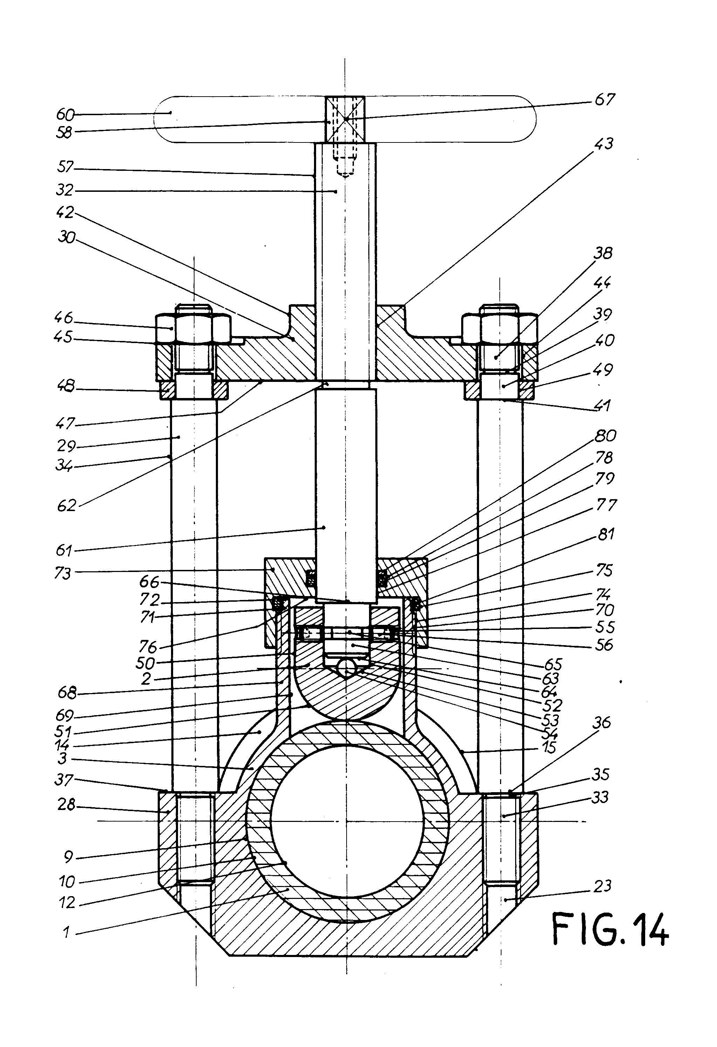

Les vannes étanches (figures 11, 12, 13, 14) et non étanches (figures 4, 5, 6, 7) se différencient par la forme de l'enveloppe extérieure (3), au passage de l'obturateur (2). Les vannes étanches possèdent une enceinte tubulaire (68), placée dans l'axe de déplacement de l'obturateur (2) et faisant partie intégrante de l'enveloppe extérieure (3). Elle entoure l'obturateur (2) en position vanne ouverte. Le diamètre de son alésage (69) est supérieur au diamètre de la partie cylindrique (50) de l'obturateur (2). La hauteur de l'alésage (69) est supérieure à la hauteur de l'obturateur (2). L'enceinte tubulaire (68) possède un filetage (70), au pas métrique fin correspondant à son diamètre, dans sa partie cylindrique supérieure, suivie par une partie lisse (71) Celle-ci, de diamètre inférieur au diamètre du filetage (70) se termine par un chanfrein à 45° (72). Une bague étanche (73), qui comporte un taraudage (74), se visse sur le filetage (70) de l'enceinte tubulaire (68). Le taraudage (74) se termine par une gorge circulaire (75) qui forme épaulement (76), pour bloquer la bague (73) sur l'extrémité de l'enceinte tubulaire (68). Un alésage (77), usiné à la tolérance H7, de même diamètre que la partie cylindrique lisse (61) de la vis de manoeuvre (32), prolonge le taraudage (74) et sert de guidage à la vis de manoeuvre (32). Au milieu de sa longueur, l'alésage (77) possède une gorge (78). Cette gorge (78) loge un joint torique (79) et une rondelle anti-extrusion (80), derrière ledit joint torique (79), du côté opposé à la pression éventuelle. La gorge (75) loge également un joint torique (81) qui, en vissant la bague étanche (73),entoure la partie cylindrique(71) de l'enceinte(68) pour faire étanchéité. Le diamètre des gorges (75) et (78) et leur largeur sont fonction du choix des joints toriques (79)et (81). Une forme hexagonale (82) termine la partie supérieure de la bague étanche (73), pour assurer son serrage.

Le passage de l'obturateur (2) à travers l'enveloppe extérieure (3), dans le cas de vannes non étanches (figures 4, 5, 6, 7), est un perçage (83) de diamètre supérieur au diamètre de la partie cylindrique (50) de l'obturateur (2).

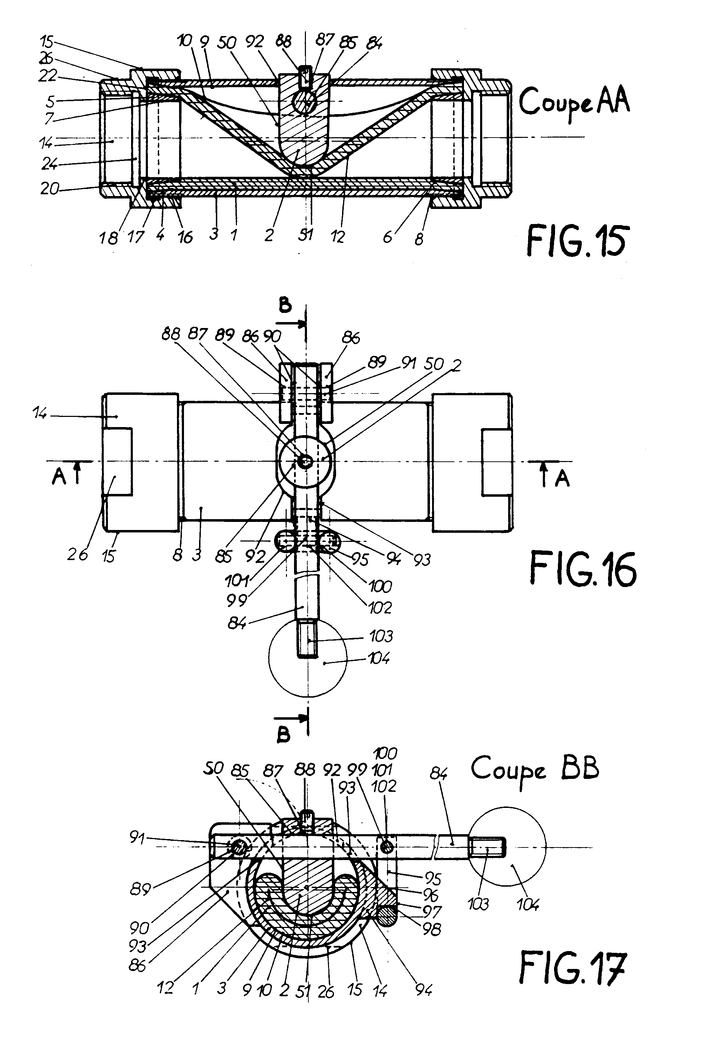

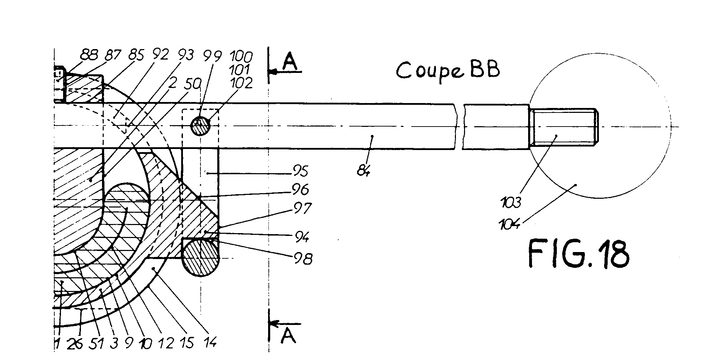

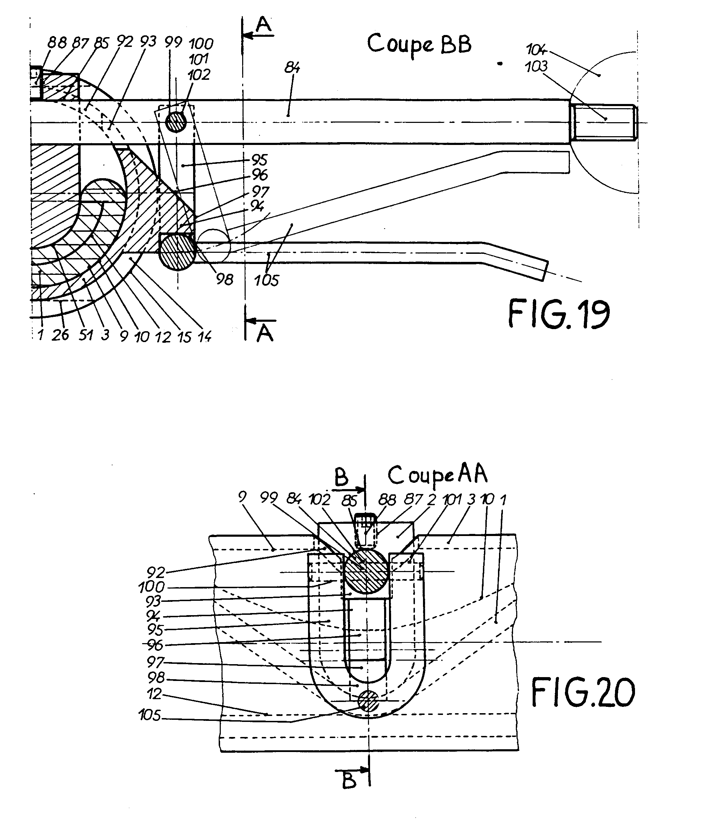

Lorsque l'obturateur (2) est manoeuvré par un levier articulé (84) (figures 15, 16, 17, 18, 19, 20), le levier (84) traverse l'obturateur (2), dans sa partie cylindrique (50), par un perçage (85) dont l'axe correspond au diamétre de l'obturateur (2). Le levier (84) s'articule dans une chape (86), partie intégrante de l'enveloppe extérieure (3) et perpendiculaire à celle-ci. L'axe de l'ensemble, obturateur (2) levier (84) et chape (86), coupe l'enveloppe extérieure (3) au milieu de sa longueur. La partie cylindrique (50) de l'obturateur (2) est percée dans son axe d'un trou taraudé (87) dans lequel une vis (88) bloque l'obturateur (2) sur le levier (84). Transversalement, en position vanne fermée, l'axe du levier articulé (84) est perpendiculaire à l'axe vertical de l'enveloppe extérieure (3), amenant ainsi l'axe vertical de l'obturateur (2) à coïncider avec l'axe du manchon (1). Ceci détermine la position du perçage (89) de la chape (86). Le logement dans la chape (86) du levier (84) correspond à la valeur du diamètre de celui-ci, augmentée de l'épaisseur des deux rondelles (90) qui assurent un guidage latéral, avec un jeu de fonctionnement, pour ledit levier (84). Le levier (84) s'articule autour d'un axe (91) qui le traverse librement suivant son diamètre et se loge dans le perçage (89) de la chape (86). L'axe (91) est serti ou emmanché serré dans le perçage (89) de la chape (86). Pour diminuer la longueur du levier (84), il est souhaitable que l'axe d'articulation (91) soit situé le plus près possible de l'axe vertical de l'obturateur (2). Cependant, le point de contact entre la partie hémisphérique (51) de l'obturateur (2) et le revêtement extérieur (10)du manchon (1), lors de la fermeture de la vanne, doit se situer le plus près possible de l'axe vertical du manchon (1), pour limiter le frottement de l'obturateur (2) sur le manchon (1) Ceci nécessite de reculer l'axe d'articulation (91) du levier (84) le plus loin possible de l'axe vertical de l'obturateur (2). Un compromis entre ces alternatives est nécessaire pour déterminer la position de l'axe d'articulation (91).

Le passage de l'obturateur (2) à travers l'enveloppe extérieure (3) est un trou oblong (92) dont la largeur est supérieure au diamètre de la partie cylindrique (50) de l'obturateur (2). Sa longueur est fonction de la distance entre l'axe d'articulation (91) et l'axe vertical de l'obturateur (2). Le trou oblong (92) est prolongé,à chacune de ses extrémités, par une rainure (93) dont la largeur est supérieure au diamètre du levier (84), pour permettre son passage. Sa profondeur est telle,qu'en position vanne fermée, le levier (84) ne porte pas sur l'enveloppe extérieure (3).

Le système de verrouillage du levier (84),en position vanne fermée, est constitué d'une nervure (94), partie intégrante de l'enveloppe extérieure (3), et d'un verrou (95) de section circulaire, en forme de U, articulé autour du levier (84). La nervure (94), dans le même axe que le levier (84), possède une pente à 45° (96) dont le sommet rejoint le fond de la rainure (93) et une partie verticale (97) qui prolonge la pente (96) à sa base. A la partie inférieure de la nervure (94) est usinée une encoche (98) dont le profil en arc de cercle épouse l'arrondi intérieur du verrou (95). L'axe (99) relie les branches du verrou (95) au levier (84) à travers les perçages (100) et (101), usinés dans l'axe de leur section. L'écartement des branches du verrou (95) est légèrement supérieur au diamètre du levier (84), de même que l'axe (99) traverse librement le perçage (102), pour laisser le verrou (95) osciller librement autour du levier (84). L'axe (99) est serti ou emmanché serré dans les perçages (100) et (101) du verrou (95). Le levier (84), à l'opposé de son axe d'articulation (91), possède une partie filetée (103) qui sert à fixer la poignée de manoeuvre (104).

Vanne ouverte, l'obturateur (2) repose sur le manchon caoutchouc (1). Une pression sur la poignée de manoeuvre (104) descend l'obturateur (2) et le verrou (95) qui glisse le long de l'enveloppe extérieure (3), puis sur la pente à 45° (96) et le long de la partie verticale (97) de la nervure (94), avant de s'engager par son propre poids dans l'encoche (98). Pour ouvrir la vanne, une pression sur la poignée de manoeuvre (104) permet de dégager le verrou (95) de son encoche (98), en le maintenant d'un doigt ou par l'intermédiaire d'une commande (105) fixée perpendiculairement à la base du verrou (95). Cette façon de procéder ne s'applique que dans les cas où le levier articulé (84) est en position horizontale, ou verticale vers le haut, vanne fermée. Dans les autres cas, le poids du verrou (95) l'écartera de l'encoche (98) pendant la manoeuvre de fermeture. Il sera alors nécessaire d'engager manuellement le verrou (95) dans son encoche (98).

Pour limiter l'interpénétration des demies circonférences du manchon (1) en position vanne fermée il est possible, dans le cas d'un obturateur (2) manoeuvré par vis (31) ou (32) et volant (60), d'incorporer sur la vis (31) ou (32) entre le volant (60) et le bossage (42) du chapeau (30) une bague entretoise non représentée. Dans le cas d'un obturateur (2) manoeuvré par levier articulé (84), le fond de la rainure (93) forme butée pour le levier (84), limitant ainsi la course de l'obturateur (2).

Le diamètre (d) de l'obturateur (2) est défini par la formule d = D-(D'-D) précédemment citée. Lorsque (D'-D)=D le manchon (1) est inapte à la conception des vannes selon l'invention. La conception n'est possible que dans les cas où (D'-D)<D, avec cependant un diamètre d'obturateur (d) suffisant pour ne pas perforer le manchon (1).

Pour ne pas diminuer exagérément le diamètre de la vis de manoeuvre (31) ou (32) ou celui du levier articulé (84) des vannes ayant un petit diamètre d'obturateur (d) et généralement une petite section de passage, la parcie cylindrique (50) de l'obturateur (2) est usinée avec deux diamètres différents. La partie hémisphérique (51) est usinée à l'extrémité d'une première partie cylindrique dont le diamètre d = D - (D'-D). Elle est prolongée, dans le même axe, par une partie cylindrique de diamètre plus important dans laquelle se loge le tourillon (63) de la vis de manoeuvre (31) ou (32), ou le levier articulé (84). Les deux parties cylindriques se rejoignent en une forme arrondie. Ce mode de réalisation n'est pas représenté.

Les systèmes de vannes, selon l'invention, sont particulièrement destinés à controler l'écoulement de fluides sous pression, à l'état liquide ou pulvérulent, dans des canalisations. Le fonctionnement de ces vannes est adapté aux liquides abrasifs, corrosifs ou chargés de particules en suspension. La nature des caoutchoucs constituant les manchons sera adaptée aux produits circulant dans les tuyauteries. Les bagues de serrage et de liaison, en contact avec les produits transportés, seront usinées dans des matériaux résistants à ces produits. Les autres éléments de ces vannes qui entreront éventuellement en contact avec les produits transportés, après rupture d'un manchon, seront usinés dans dans des matériaux adaptés. Divers métaux conviennent à la fabrication de ces vannes, notamment le bronze, l'acier traité anticorrosion ou l'acier inoxydable. Cette énumération n'est pas exhaustive. Des matériaux composites ou certaines matières plastiques peuvent entrer partiellement ou complètement dans la réalisation de ces vannes. La résistance à la pression d'utilisation et au produit transporté seront les critères de choix pour les éléments constitutifs. Les pressions d'utilisation dépendent essentiellement de la résistance des manchons utilisés, les autres pièces étant dimensionnées en conséquence.

**Revendications**

**1.** Vanne à passage direct avec un manchon caoutchouc et un obturateur hémisphérique, destiné à contrôler ou obturer mécaniquement le passage d'un fluide sous pression dans une canalisation, cette vanne comportant un manchon en caoutchouc (1), comprimé par un obturateur (2) dont l'extrémité est hémisphérique (51), l'obturateur (2) étant manoeuvré par une vis (31,32) à volant (60) et écrou (43), une enveloppe extérieure (3) sous forme de tube rigide entourant le manchon (1) qui y est fixé par ses extrémités axiales, l'enveloppe extérieure (3) possédant un orifice sur sa circonférence, qui peut être un perçage (83) ou un alésage (69) dans une enceinte tubulaire (68) pour laisser passer l'obturateur (2) suivant un axe se confondant avec l'axe de l'orifice (83,69), le déplacement de l'obturateur (2) comprimant le manchon (1) à l'intérieur de l'enveloppe extérieure (3) pour obturer le passage du fluide, le manchon (1) se repliant diamétralement sur lui-même tout en s'étirant longitudinalement et reprenant sa forme par élasticié après relâchement de l'obturateur (2), caractérisée en ce que la vanne comprend un étrier formant écrou pour la vis de manoeuvre (31,32) de l'obturateur (2), dont l'axe de déplacement se confond avec l'axe de l'orifice (83,69), cet étrier étant formé d'une embase (28), partie intégrante de l'enveloppe extérieure (3), de deux goujons (29) et d'un chapeau (30) qui forme écrou (43) pour la vis de manoeuvre (31,32), et en ce que la serrage de chaque extrémité du manchon (1) dans l'enveloppe extérieure (3) est effectué au moyen d'une bague conique (5), lisse à l'extérieur, alésée (7) au diamètre intérieur du manchon (1), sur laquelle s'appuie l'épaulement intérieur (22) d'une bague de liaison (14), la bague de liaison (14) étant vissée sur la surface extérieure de l'enveloppe (3), alésée (18) au diamètre intérieur du manchon (1) et réalisant la liaison avec la canalisation, de sorte que, en vissant la bague de liaison (14), la bague conique (5) emboîtée dans le manchon (1) s'enfonce progressivement à l'intérieur du dit manchon (1), serrant son extrémité contre l'enveloppe extérieure (3) et perpendiculaire à ladite enveloppe extérieure (3).

**2.** Vanne à passage direct avec un manchon caoutchouc et un obturateur hémisphérique, destiné à contrôler ou obturer mécaniquement le passage d'un fluide sous pression dans une canalisation, cette vanne comportant un manchon en caoutchouc (1), comprimé par un obturateur (2) dont l'extrémité est hémisphérique (51), l'obturateur (2) étant manoeuvré par un levier articulé (84), une enveloppe extérieure (3) sous forme de tube rigide entourant le manchon (1) qui y est fixé par ses extrémités axiales, l'enveloppe extérieure (3) possédant un orifice (92) sur sa circonférence pour laisser passer l'obturateur (2) manoeuvré par le levier articulé (84), une chape (86) servant de point fixe pour l' articulation du dit levier (84), faisant partie intégrante de l'enveloppe extérieure (3) et étant désaxée verticalement par rapport à l'enveloppe extérieure (3) et horizontalement, son axe étant perpendiculaire à l' axe longitudinal de la vanne et coïncidant avec l'axe de l'orifice (92) de l'enveloppe (3), un axe (91) traversant d'une part la chape (86), et, d'autre part une extrémité du levier (84) suivant un diamètre de ce dernier, l'autre extrémité du dit levier (84) comportant une poignée (104) ou un embout de manoeuvre, le déplacement de l'obturateur (2) comprimant le manchon (1) à l'intérieur de l'enveloppe extérieure (3) pour obturer le passage du fluide, le manchon (1) se repliant diamétralement sur lui-même tout en s'étirant longitudinalement et reprenant sa forme par élasticité après relâchement de l'obturateur (2), la vanne étant caractérisée en ce que ledit obturateur (2) est percé (85) suivant son diamètre et, traverse par le levier (84) dans sa partie cylindrique (50), en ce qu'une vis de blocage (88) assure la liaison entre l'obturateur (2) et le levier (84), et en ce que le serrage de chaque extrémité du manchon (1) dans l'enveloppe extérieure (3) s'effectue au moyen d'une bague conique (5), lisse à l'extérieur, alésée (7) au diamètre intérieur du manchon (1), sur laquelle s'appuie l'épaulement intérieur (22) d'une bague de liaison (14), la bague de liaison (14) étant vissée sur la surface extérieure de l'enveloppe (3), alésée (18) au diamètre intérieur du manchon (1) et réalisant la liaison avec la canalisation, de sorte que, en vissant la bague de liaison (14), la bague conique (5) emboitée dans le manchon (1) s'enfonce progressivement à l'intérieur du dit manchon (1), serrant son extrémité contre l'enveloppe extérieure (3).

**3.** Vanne selon la revendication 2 caractérisée en ce qu'un verrou (95) en forme de "U" assure l'immobilisation du levier (84) en position " vanne fermée" , un axe (99) reliant la partie supérieure des deux branches du "U" traverse diamétralement le levier (84), en permettant au verrou (95) de s'articuler librement, le verrou (95) étant placé entre l'obturateur (2) et la poignée de manoeuvre (104), à l'opposé du point fixe, une nervure pentée (94), partie intégrante de l'enveloppe extérieure (3) du manchon (1), incline le verrou (95) vers la poignée (104) du levier (84) pendant le mouvement de descente de l'obturateur (2), le manchon (1) étant comprimé suffisamment pour assurer la fermeture de la vanne, le verrou (95) s'engage par son propre poids dans une encoche (98) pratiquée à la partie inférieure de la nervure pentée (94), l'ouverture de la vanne s'effectuant en exerçant une légère pression sur le levier ariculé (84) afin de faire sortir le verrou (95) de l'encoche (98).

**4.** Vanne selon la revendication 3 caractérisée en ce qu'une tige de commande (105), fixée au verrou (95) à la partie inférieure du "U", permet de déverrouiller l'obturateur (2) en appuyant sur le levier articulé (84), dans un même mouvement.

## Claims

**1.** Direct passage valve with a rubber sleeve and a hemispherical shutter, designed to control or cut off mechanically the passage of a fluid under pressure in a pipe, the valve including a rubber sleeve (1), compressed by a shutter (2) the end of which is hemispherical (51); the shutter (2) is controlled by a screw (31,32) with a wheel (60) and a nut (43); an outer envelope (3) in the form of a rigid tube surrounding the sleeve (1) which is fastened thereto by its axial ends; the outer envelope (3) has an opening on its circumference, which can be bored (83) or reamed (69) in a tubular enclosure (68) to allow the shutter (2) to pass along an axis merging with the axis of the opening (83, 69); the displacement of the shutter (2) compresses the sleeve (1) inside the outer envelope (3) to cut off the passage of the fluid; the sleeve (1) is bent back diametrically onto itself while being stretched longitudinally and returns to its original shape by elasticity after release of the shutter (2), characterized by the fact that the valve includes a stirrup forming a nut for the control screw (31,32) of the shutter (2) the displacement axis of which merges with the axis of the opening (83,69); this stirrup is formed by a base (28), an integral part of the outer envelope (3), two pins (29) and a cap (3) which forms a nut (43) for the control screw (31,32), and by the fact that the tightening of each end of the sleeve (1) in the outer envelope (3) is performed using a tapered bushing (5), smooth on the outside, bored (7) to the inside diameter of the sleeve (1), on which rests the inside shoulder (22) of a connecting ring (14), the connecting ring (14) being screwed on the outer surface of the envelope (3), bored (18) to the inside diameter of the sleeve (1) and making the connection with the pipe, so that, by screwing the connecting ring (14), the tapered bushing (5) fitted into the sleeve (1) is progressively driven into the inside of the said sleeve (1) tightening its end against the outer envelope (3) and perpendicular to the said outer envelope (3).

2. Direct passage valve with a rubber sleeve and a hemispherical shutter, designed to control or cut off mechanically the passage of a fluid under pressure in a pipe, this valve including a rubber sleeve (1), compressed by a shutter (2) the end of which is hemispherical (51); the shutter (2) being controlled by an articulated lever (84); an outer envelope (3) in the form of a rigid tube surrounding the sleeve (1) which is fastened thereto by its axial ends; the outer envelope (3) has an opening (92) on its circumference to allow the shutter (2) controlled by the articulated lever (84) to go through, a yoke (86) acting as a fixed point for the articulation of the said lever (84), forming an integral part of the outer envelope (3) and being thrown off centre vertically with respect to the outer envelope (3) and horizontally, its axis being perpendicular to the longitudinal axis of the valve and coinciding with the axis of the opening (92) of the envelope (3); a pin (91) going through on the one hand, the yoke (86), and, on the other hand, one end of the lever (84) along the diameter of the latter, the other end of the said lever (84) including a handle (104) or a manipulating tip; the displacement of the shutter (2) compresses the sleeve (1) on the inside of the outer envelope (3) to cut off the passage of the fluid; the sleeve (1) is bent back diametrically onto itself while being stretched longitudinally and returns to its original shape by elasticity after release of the shutter (2); the valve is characterized by the fact that the said shutter (2) bored (85) following its diameter and traversed by the lever (84) in its cylindrical part (50), and by the fact that a locking screw (88) ensures the connection between the shutter (2) and the lever (84), and by the fact that the tightening of each end of the sleeve (1) in the outer envelope (3) is performed by means of a tapered bushing (5), smooth on the outside, bored (7) to the inside diameter of the sleeve (1), on which rests the inside shoulder (22) of a connecting ring (14); the connecting ring (14) is screwed on the outer surface of the envelope (3), bored (18) to the inside diameter of the coupling (1) and makes the connection with the pipe, so that by screwing the connecting ring (14), the tapered bushing (5) fitted into the sleeve (1) is progressively driven into the inside of the said sleeve (1) tightening its end against the outer envelope (3).

3. Valve in accordance with Claim 2 characterized by a U-shaped locking bolt (95) that ensures the immobilization of the lever (84) in the "valve closed" position; a pin (99) linking the upper part of the two branches of the "U" traverses the lever (84) diametrically, enabling the locking bolt (95) to articulate freely; the locking bolt (95) is placed between the shutter (2) and the manipulation handle (104), opposite the fixed point; a sloped rib (94), an integral part of the outer envelope (3) of the sleeve (1), inclines the locking bolt (95) towards the handle (104) of the lever (84) during the downward movement of the shutter (2); the sleeve (1) is compressed sufficiently to ensure the closure of the valve; the locking bolt (95) is engaged by its own weight in a notch (98) made in the lower part of the sloped rib (94); the opening of the valve is made by exerting slight pressure on the articulated lever (84) to lift the locking bolt (95) out of the notch (98).

4. Valve in accordance with Claim 3 characterized by the fact that a control rod (105), fastened to the locking bolt (95) on the lower part of the "U", makes it possible to release the shutter (2) by pressing on the articulated lever (84), in one and the same movement.

## Patentansprüche

1. Gerader Durchgangsschieber versehen mit einer Gummimuffe und einer halbkugelförmigen Verschlussvorrichtung, welcher dazu dient den Durchfluss einer unter Druck befindenden Flüssigkeit in einer Kanalisation maschinell zu kontrollieren oder abzusperren. Dieser mit einer Gummimuffe (1) versehene Durchgangsschieber, welcher von einer Verschlussvorrichtung (2) mit halbkugelförmigem Ende (51) verdichtet ist, und diese Verschlussvorrichtung (2) mittels einer Schraube (31, 32) mit Flügeln (60) und Schraubenmutter (43) versehen, bedient wird, einer Aussenumkleidung (3) in Form eines steifen Rohres welches die Muffe (1) umgibt die mittels ihrer Axialenden darauf befestigt ist. Die Aussenumkleidung (3) die auf ihrer Peripherie einen Einlass besitzt bestehend aus einem Stich (83) oder einer Bohrung (69) die man an einer Rohrleitung (68) durchgeführt hat um den Durchgang der Verschlussvorrichtung (2) gemäss einer Achse die sich mit der Einlassachse (83, 69) vereinigt, zu ermöglichen. Die Verlagerung der Verschlussvorrichtung (2) die die Muffe (1) auf der Innenseite der Aussenumkleidung (3) verdichtet und somit den Durchfluss der Flüssigkeit absperrt, die Muffe (1) überschlägt sich diametral und dehnt sich gleichzeitig der Länge nach und nimmt somit dank ihrer Elastuzität ihre ehemalige Form nach Lockerung der Verschlussvorrichtung (2) wieder an. Dieser Durchgangsschieber kennzeichnet sich dadurch, dass er mit einem Bügel versehen ist, weicher eine Schraubenmutter für die Bedienungsschraube (31, 32) der Verschlussvorrichtung (2) bildet, dessen Verschiebungsachse sich mit der Einlassachse (83, 69) vereinigt. Dieser Bügel besteht aus einem Ansatz (28), integrierter Teil der Aussenumkleidung (3), aus zwei Dübeln (29) und einem Aufsatz (30), welcher als Schraubenmutter (43) für die Bedienungsschraube (31,32) dient und wodurch die Befestigung jedes Endes der Muffe (1) an der Aussenumkleidung (3) mittels einem Keilring (5) durchgeführt ist, welcher an der Aussenseite eben, und gemäss dem inneren Durchmesser der Muffe (1) ausgebohrt (7) ist, und auf welchem sich der innere Anschlag (22) eines Verbindungsringes (14) stützt. Der Verbindungsring (14) ist an der Aussenseite der Umkleidung (3) aufgeschraubt und gemäss dem inneren Durchmesser der Muffe (1) ausgebohrt (18), und stellt dadurch die Verbindung mit der Kanalisation dar, so dass der in die Muffe (1) verschränkte Keilring (5) beim Aufschrauben des Verbindungsringes (14) progressiv in das Mittelstück der sogenannten Muffe (1) eindringt und sein Endteil gegen die Aussenumkleidung (3) und gleichzeitig senkrecht gegen diese presst.

2. Direkter Durchgangsschieber versehen mit einer Gummimuffe und einer halbkugelförmigen Verschlussvorrichtung welcher dazu dient den Durchfluss einer unter Druck befindenden Flüssigkeit in einer Kanalisation maschinell zu kontrollieren oder abzusperren. Dieser mit einer Gummimuffe (1) versehene Durchgangsschieber welcher von einer Verschlussvorrichtung (2) mit halbkugelförmigem Ende (51) verdichtet ist und diese Verschlussvorrichtung (2) mittels eines beweglichen Hebels (84) bedient wird, einer Aussenumkleidung (3) in Form eines steifen Rohres welche die Muffe (1) umgibt die mittels ihrer Axialenden darauf befestigt ist. Die Aussenumkleidung (3) die auf ihrer Peripherie einen Einlass (92) besitzt um den Durchgang der Verschlussvorrichtung (2) zu ermöglichen welche mittels des beweglichen Hebels (84) bedient wird, einen Aufsatz (86) der als Verankerungspunkt für die Drehbefestigung dieses Hebels (84) dient welcher ein integrierter Bestandteil der Aussenumkleidung (3) darstellt und der in Bezug auf diese Aussenumkleidung (3) vertikal versetzt ist, und horizontal, da seine Achse zur Längsachse des Durchgangsschiebers senkrecht steht, und mit der Einlassachse (92) der Umkleidung (3) kongruent ist. Eine Achse (91) die einerseits den Aufsatz (86) durchquert und andererseits durch ein Ende des Hebels (84) gemäss dem Durchmesser des letzteren hindurchgeht, das andere Ende des genannten Hebels (84) ist mit einem Griff (104) oder einem Bedienungsrohrstück ausgestattet, und die Verlagerung der Verschlussvorrichtung (2) verdichtet die Muffe (1) im inneren der Aussenumkleidung (3) um den Durchfluss der Flüssigkeit abzusperren und die Muffe (1) überschlägt sich somit diametral und dehnt sich gleichzeitig der Länge nach und nimmt somit dank ihrer Elastizität ihre ehemalige Form nach Lockerung der Verschlussvorrichtung (2) wieder an. Der Durchgangsschieber kennzeichnet sich dadurch, dass die genannte Verschlussvorrichtung (2) gemäss ihrem Durchmesser durch-brochen (85) ist und von dem Hebel (84) in ihrem zylinderförmigen Teil (50) durchquert wird, indem eine Blockierungsschraube (88) die Verbindung zwischen der Verschlussvorrichtung (2) und dem Hebel (84) versichert, und indem die Befestigung jedes Endes der Muffe (1) an der Aussenumkleidung (3) mittels einem Keilring (5) durchgeführt ist, welcher an der Aussenseite eben, und gemäss dem inneren Durchmesser der Muffe (1) ausgebohrt (7) ist und auf welchem sich der innere Anschlag (22) eines Verbindungsringes (14) stützt. Der Verbindungsring (14) ist an der Aussenseite der Umkleidung (3) aufgeschraubt und gemäss dem inneren Durchmesser der Muffe (1) ausgebohrt (18), und stellt dadurch die Verbindung mit der Kanalisation dar, so dass der in die Muffe (1) verschränkte Keilring (5) beim Aufschrauben des Verbindungsringes (14) progressiv in das Mittelstück der sogenannten Muffe (1) eindringt und sein Endteil gegen die Aussenumkleidung presst.

3. Durchgangsschieber laut Patentanspruch 2) der sich dadurch kennzeichnet, dass ein Riegel (95) in Form eines "U" die Blockierung des Hebels (84) in Stellung "Durchgangsschieber geschlossen" garantiert, eine Achse (99), die das Oberteil der beiden "U"förmigen Riegelarme verbindet, durchquert diametral den Hebel (84) wodurch der Riegel (95) seine freie Beweglichkeit behält. Der Riegel (95) befindet sich zwischen der Verschlussvorrichtung (2) und dem Bedienungsgriff (104), dem Fixpunkt gegenüberliegend, eine abschüssige Rippe (94) die ein integrierter Teil der Aussenumkleidung (3) der Muffe (1) darstellt neigt den Riegel während der Abwärtsbewegung der Verschlussvorrichtung (2) gegen den Griff (104) des Hebels (84), und da die Muffe (1) genügend verdichtet ist um den Verschluss des Durchgangsschiebers zu gewährleisten, rastet der Riegel (95) infolge seines eigenen Gewichtes in eine Kerbe (98) ein, welche an der Unterseite der abschüssigen Rippe (94) ausgeführt wurde und die Öffnung des Durchgangsschiebers wird durch einen leichten Druck auf den beweglichen Hebel (84) erreicht um somit den Riegel (95) aus der Kerbe (98) herauszutreiben.

4. Durchgangsschieber laut Patentanspruch 3) der sich dadurch kennzeichnet, dass eine Steuerstange (105) am Riegel (95) an der Unterseite des "U" angebracht, die Entblockung der Verschlussvorrichtung (2) ermöglicht indem man unter gleicher Bewegung auf den beweglichen Hebel (84) drückt.

## FIG.2

## FIG.1

FIG.3

FIG.4

Coupe AA

FIG.5

½ Coupe BB

FIG.6

Coupe CC

FIG. 7

FIG.8

FIG. 9

Coupe BB

3  9  1  10  12  13  8  16  4  11  6  7  17  5  15  27  22  25  21  18  19

A

B

Vue suivant A

19  27  18  21  15

B

FIG. 10

Coupe AA

FIG. 11

1/2 Coupe BB

FIG. 12

Coupe CC

FIG. 13

FIG.14

Coupe AA

FIG.15

FIG.16

Coupe BB

FIG.17

88 87 85 92 93 99 100
101
102

2 50

95
96
97
94
98

1 26 51 3 9 10 12 15 14

Coupe BB

84

103
104

FIG. 18

Coupe BB

88 87 85 92 93 99 100 101 102

84

104 103

95 96 97 94

98 105

1 26 51 3 9 10 12 15 14

**FIG.19**

Coupe AA

9 99 84 102 85 88 87 2 101 3 10 1

92
100
93
94
95
96
97
98
12
105

**FIG.20**